(19) Europäisches Patentamt
European Patent Office
Office européen des brevets

(11) **EP 3 104 612 B1**

(12) **EUROPEAN PATENT SPECIFICATION**

(45) Date of publication and mention of the grant of the patent:
**23.12.2020 Bulletin 2020/52**

(51) Int Cl.:
***H04N 19/577*** *(2014.01)*  ***H04N 19/587*** *(2014.01)*

(21) Application number: **16173445.4**

(22) Date of filing: **08.06.2016**

(54) **COMPLEMENTARY VECTORS**

KOMPLEMENTÄRE VEKTOREN

VECTEURS COMPLÉMENTAIRES

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **08.06.2015 GB 201509881**

(43) Date of publication of application:
**14.12.2016 Bulletin 2016/50**

(73) Proprietor: **Imagination Technologies Limited Kings Langley, Hertfordshire WD4 8LZ (GB)**

(72) Inventors:
• **DIGGINS, Jonathan**
  **Waterlooville, Hampshire PO8 9SJ (GB)**
• **FISHWICK, Steven**
  **Kings Langley, Hertfordshire WD4 8LZ (GB)**

(74) Representative: **Slingsby Partners LLP**
**1 Kingsway**
**London WC2B 6AN (GB)**

(56) References cited:
**EP-A1- 1 774 794     US-A1- 2010 053 451**

• **CAFFORIO C ET AL: "MOTION COMPENSATED IMAGE INTERPOLATION", IEEE TRANSACTIONS ON COMMUNICATIONS, IEEE SERVICE CENTER, PISCATAWAY, NJ. USA, vol. 38, no. 2, 1 February 1990 (1990-02-01), pages 215-222, XP000113142, ISSN: 0090-6778, DOI: 10.1109/26.47856**
• **CHOI B-T ET AL: "NEW FRAME RATE UP-CONVERSION USING BI-DIRECTIONAL MOTION ESTIMATION", IEEE TRANSACTIONS ON CONSUMER ELECTRONICS, IEEE SERVICE CENTER, NEW YORK, NY, US, vol. 46, no. 3, 1 August 2000 (2000-08-01) , pages 603-609, XP001142884, ISSN: 0098-3063, DOI: 10.1109/30.883418**

**Description**

BACKGROUND OF THE INVENTION

This invention relates to a method and data processing system for performing motion estimation.

In systems for handling video streams or other sequences of frames it is useful to be able to estimate the motion of features depicted in the stream between frames. Such motion estimation information has a variety of uses. For example, in a playback device, motion estimation information can be used to guess where features will be at a point in time between video frames and hence enable frame rate conversion through the generation of one or more interpolated frames between the frames of a video stream. In recording or encoding devices, motion estimation information allows efficient compression of a video stream since it is possible to, over a period of one or more video frames, replace the pixels representing the same feature in multiple video frames with a compressed description of the pixels and information describing the movement of those pixels between frames.

Various techniques for estimating the motion of pixels or groups of pixels between video frames are known. One common method, known as block based motion estimation, will now be described by way of example. Block based motion estimation subdivides frames of a video sequence into multiple regions known as blocks or macroblocks. Generally speaking, in order to identify the motion of a block between frames, pixel data in each block of a frame is compared with pixel data from various candidate locations in a previous or following frame. The relative position of the candidate that gives the best match may be expressed as a vector which is then used to represent the motion of that block between the frames. By repeating these steps over the blocks of a frame, a set of motion vectors can be generated for the frame which is known as its motion vector field.

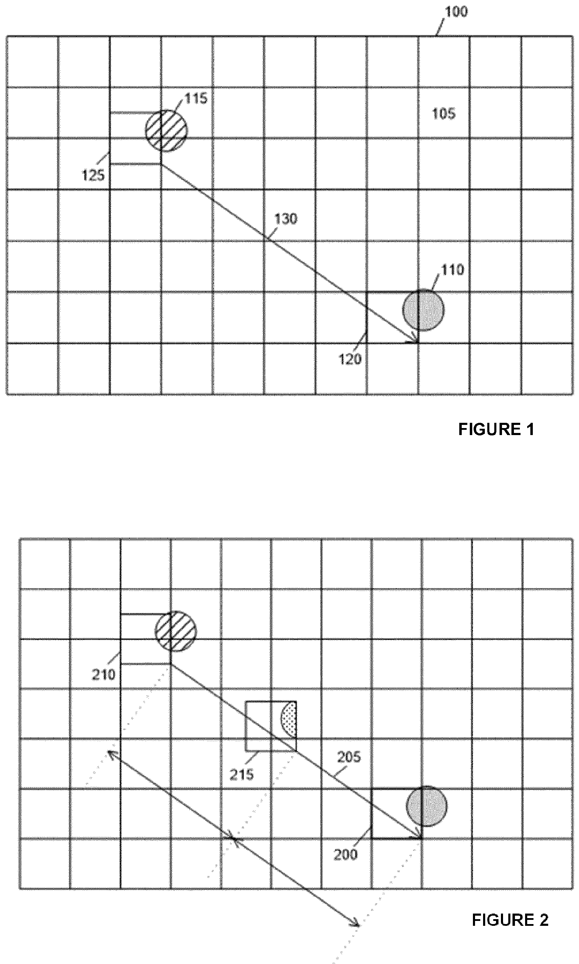

Motion estimation techniques commonly use what may be referred to as single-ended motion vectors. Figure 1 shows an example block based single-ended motion estimation. An image 100 is divided into a regular array of blocks 105, and motion estimation proceeds for each block in turn.

Figure 1 shows a moving object 110 at a certain position in one frame of a video sequence, and, superimposed onto the same figure, the same object 115, at its position in the previous frame in the sequence. The image data in block 120 contains a number of pixels representing part of object 110. Motion estimation for block 120 involves searching the previous frame in the sequence to find the area of image data with contents most similar to the contents of block 120. Assuming that the motion estimation performs well, the area 125 is found. It can be seen that area 125 is the same size as block 120, but is not aligned to the grid 105. The position of the area of matching pixels 125, relative to block 120, determines motion vector 130 which reflects the motion of object 110, and is said to be the motion vector of block 120.

Single-ended motion estimation works well in some applications, such as video encoding, since it produces one vector for each block, such as 120, in each frame 100 that is encoded.

In a motion compensated frame rate converter it is generally necessary to produce an interpolated frame at an intermediate position between two existing source frames in a video sequence. Figure 2 shows the motion estimation result from Figure 1 being used to interpolate image data in a new frame mid-way between two source frames from the original video sequence. Motion estimation for block 200 determines motion vector 205, and pixels for a new area of frame 215, positioned at the midpoint of the vector, are derived from the pixels in block 200 and from the pixels in area 210. Notice that the interpolated area 215 is not necessarily aligned to the block grid.

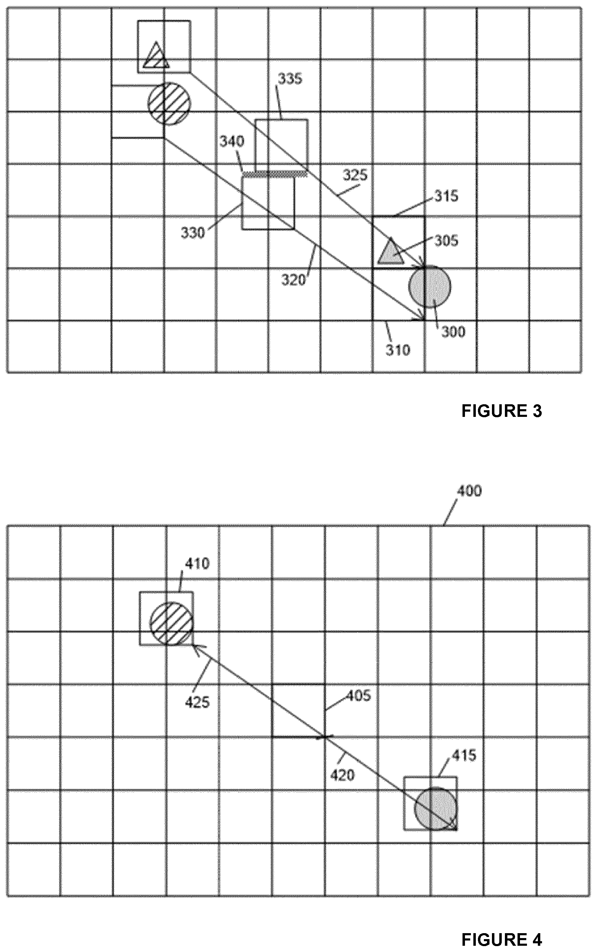

Figure 3 illustrates a problem that arises when using single-ended vectors in a frame rate converter. Objects 300 and 305 are moving at different speeds, giving rise to unequal motion vectors 320 and 325 for the blocks 310 and 315 respectively. In this example the vectors are converging. Interpolation of a new frame involves the creation of pixel data at positions 330 and 335, the mid-points of the two vectors. Blocks 310 and 315 are adjacent, but the interpolated areas, 330 and 335 are not. This leads to a hole, 340, in the interpolated frame. An alternative situation exists where vectors diverge, leading to overlap of interpolated areas. In either case, additional frame processing is required to resolve holes and overlap areas, in order to produce an output frame with one value at each pixel position.

Figure 4 shows an example of double-ended (or bidirectional) motion estimation. When used in the example application of a frame rate converter, this type of motion estimation has the advantage of producing exactly one value for each pixel position in the interpolated frame. The frame to be interpolated, 400, is divided into a regular array of blocks, 405, and motion estimation takes place for each block in turn. Motion estimation for block 405 involves searching the previous and next frames in the sequence for areas of image data that are most similar to each other. The search is constrained, in this example, by requiring that the offsets of the areas tested are equal in magnitude and opposite in direction with respect to the position of block in the interpolated frame (representative of an interpolation at the temporal mid-point between the previous and next source frames). In this example, the best match is found between area 410 in the previous frame and area 415 in the next frame, both of which are shown superimposed onto the grid of blocks in the interpolated frame. Note that neither area is necessarily aligned with the grid. The forward offset 420 is equal to the backward offset 425. In combination the two offsets may be said to be the motion vector of block 405, and represent the motion of an object in the interval between source frames.

Interpolation of pixel data in block 405 requires that pixel data be derived from one or both of the areas of pixel data 410 and 415. The alignment of the grid to the interpolated frame means that exactly one value is produced for each pixel position.

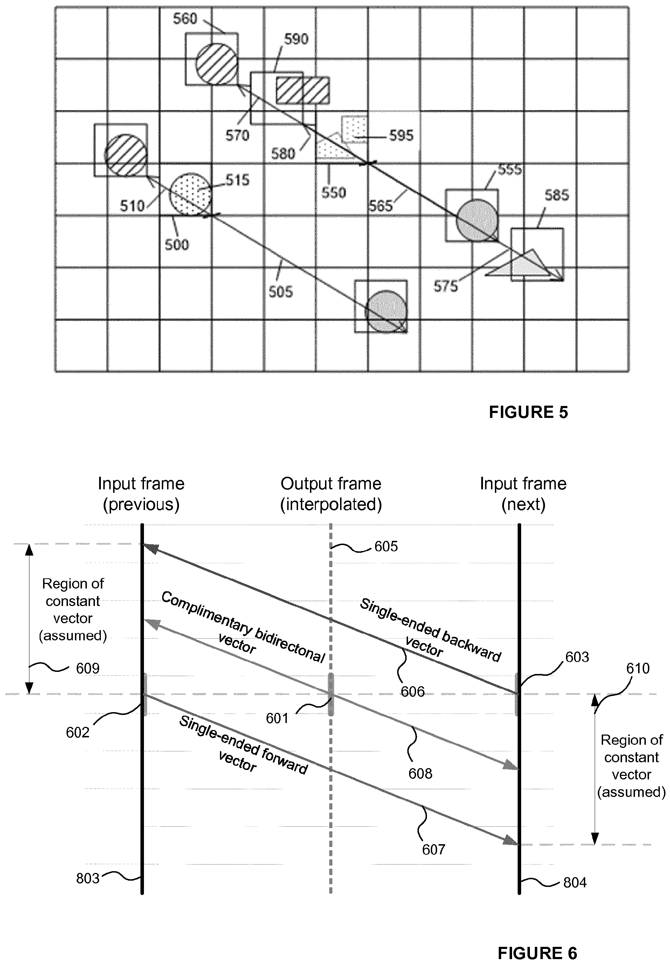

The example of Figure 4 shows interpolation occurring at the temporal mid-point between two source frames. In frame rate conversion it is common that other interpolation phases are required, for example interpolation at one quarter of the interval between source frames. In such a situation several possibilities exist, two of which are illustrated in Figure 5.

In one example, a block 500 is motion estimated and interpolated using a method similar to that illustrated in Figure 4. However, it is known that interpolation at one quarter of the frame interval is required, and so the forward offset 505 is scaled such that it is three times the size of the backward offset 510. The scaled offsets are then used in motion estimation and interpolation. This gives correct interpolation of object 515. Should further interpolations be required, for example at half and three-quarter intervals, further motion estimations are performed with forward and backward offset sizes adjusted accordingly. This method performs well, but may require several motion estimations per source frame interval. Where frame rate is being increased by a large factor, the cost of these motion estimations can be significant.

In another example, interpolation is required at several fractions within the source frame interval, but motion estimation is performed only once per interval, typically at the mid-point. Motion estimation for block 550 therefore searches for matching image areas with equal and opposite offsets, and may find areas 555 and 560 with offsets 565 and 570 respectively. For interpolation, the motion vector is scaled according to the position of the interpolation within the interval. For example, interpolation at one quarter of the interval sees the vector scaled into forward component 575 and backward component 580. Generally, when motion is uniform across large parts of the image, the resulting interpolation is reasonably accurate. The example of Figure 5 shows an example where an error occurs. Offsets 575 and 580 cause the interpolation to be derived from image areas 585 and 590. Note that the method used for the motion estimation of block 500 would not have selected areas 585 and 590 because the image data in those areas does not match. However, the interpolation of block 550 has no alternative but to derive an interpolated output from this data. The result may be a composite of the two areas, as shown at 595.

Block based motion estimators typically select their output motion vector by testing a set of motion vector candidates for a block against the pixels of the source frames by using a method such as a sum of absolute differences (SAD) or mean of squared differences (MSD) to identify motion vectors which give the lowest error block matches. One or more single-ended or double-ended motion vector candidates are generated to describe the motion of a block of pixels between frames by searching for a match for the block of pixels in that pair of frames.

US 2010/053451 A1 (SEONG YEOL MIN [KR] ET AL) 4 March 2010 (2010-03-04) discloses such a block based motion estimation for frame rate interpolation. US 2010/053451 discloses testing forward and backward vectors, comparing those vectors and creating a bi-directional vector from one of the two vectors.

In various video coding standards, for example, H.264, "B frames" are bi-directionally predicted using a different mechanism to that described above for frame rate conversion. Each encoded block may choose to use one or two reference frames. Where one reference frame is used the encoding is similar to that used in a uni-directionally predicted, "P", frame. Where two reference frames are used, the prediction may be an average of reference pixels taken from one frame preceding the encoded frame, and from one frame following it. The vectors identifying the reference pixel areas in the two reference frames are not necessarily equal in length or co-linear, and motion estimation attempts to match pixel data in each of the reference frames with the pixel data in the block being encoded.

Conventional motion estimation systems can introduce flicker and other artefacts into an output video stream. Flicker is generally considered to be the presence of unwanted (often chaotic) variations in intensity over time. It is a particular problem in regions of a frame where it is difficult to identify good motion vectors to describe the movement of pixels between frames. For example, in systems which rely on pixel matching to identify motion vectors, poor motion vectors can be generated for frame regions which exhibit little variation in contrast (e.g. a white wall in a video) or which comprise areas of repeating patterns (e.g. a dense forest of trees or grass on a sports pitch). Such regions of uncertain vectors lead to flicker and swirling effects in an output video stream.

Various approaches have been previously used in motion estimation systems to reduce flicker and similar artefacts. For example, Y. Kuszpet et al. describe a post-processing technique which uses a simple motion compensated averaging filter for flicker reduction in "Post-Processing for Flicker Reduction in H.264/AVC," Proc. Picture Coding Symposium, Lisbon, Portugal, Nov. 2007. H. Abbas and L. J. Karam describe the use of recursive filters to reduce mosquito noise and associated flicker in "Suppression of Mosquito Noise by recursive Epsilon-filters," Proc. IEEE ICASSP, Honolulu, Hawaii, April 2007. And V. Naranjo and A. Albiol describe a histogram-matching method to reduce the brightness and contrast variation in consecutive frames of old films in "Flicker reduction in old films," Proc. IEEE ICIP, Vancouver, Canada, Sep. 2000.

However, such conventional techniques attempt to reduce flicker and associated artefacts through post-processing of video frames and do not address the introduction of flicker by a motion estimation system. Furthermore, these techniques require a system to perform significant processing in addition to any motion estimation performed by the system.

BRIEF SUMMARY OF THE INVENTION

The invention is set out in the appended set of claims.

BRIEF DESCRIPTION OF THE DRAWINGS

The present invention will now be described by way of example with reference to the accompanying drawings. In the drawings:

Figure 1 shows an example block based single-ended motion estimation.
Figure 2 shows the motion estimation result from Figure 1 being used to interpolate image data in a new frame midway between two source frames from the original sequence of frames.
Figure 3 illustrates a problem that arises when using single-ended vectors in a frame rate converter.
Figure 4 shows interpolation occurring at a temporal mid-point between two source frames.
Figure 5 shows interpolation occurring at other points between two source frames.
Figure 6 illustrates the generation of a bidirectional complementary vector.
Figure 7 illustrates the significance of object size to the generation of complementary vectors.
Figure 8 is a schematic diagram of a data processing system configured to perform motion estimation using complementary vectors.
Figure 9 is a flowchart illustrating a method for performing motion estimation in a sequence of frames.

DETAILED DESCRIPTION OF THE INVENTION

The following description is presented by way of example to enable any person skilled in the art to make and use the invention. The present invention is not limited to the embodiments described herein and various modifications to the disclosed embodiments will be readily apparent to those skilled in the art.

There is a need for a method and data processing system for performing motion estimation in a manner which minimises the introduction of flicker into a sequence of frames without requiring additional image processing. There is furthermore a general need for a more efficient method and data processing system for performing motion estimation which has lower processing demands than conventional motion estimation methods and systems.

In the examples described herein, the methods and systems for performing motion estimation perform block based motion estimation. Other types of motion estimation are known and it is envisaged that the principles described herein may be applied to such other types of motion estimation. The methods and systems for performing motion estimation described herein may be applied to any sequence of frames, such as video streams (including interlaced or non-interlaced video streams) or a series of images (including photographs or rendered images).

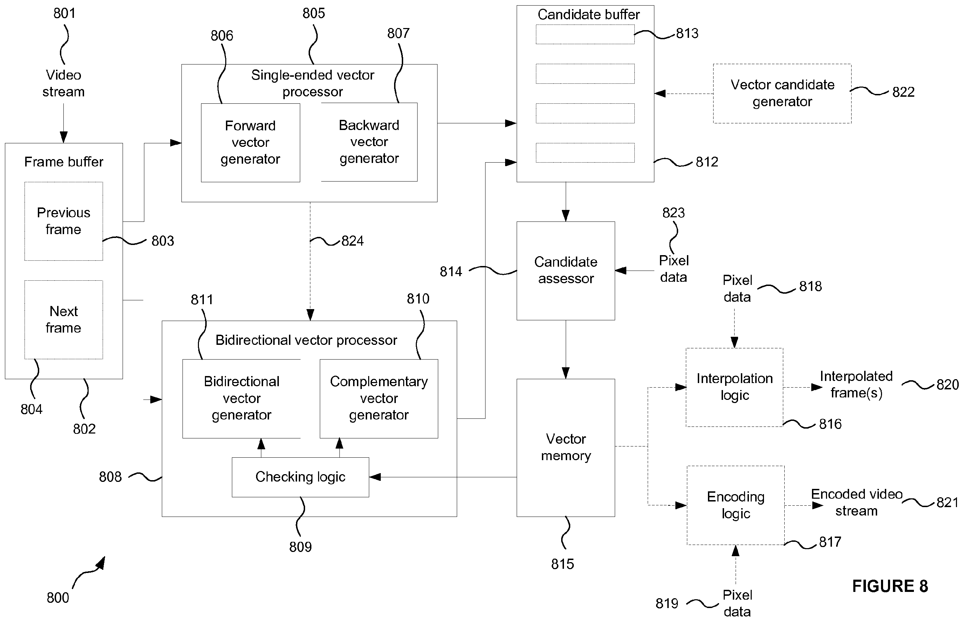

A data processing system 800 for performing motion estimation in a sequence of frames is shown in Figure 8. The configuration of the system so as to minimise the introduction of flicker and associated artefacts into the video stream whilst reducing the processing required to generate motion vectors will now be described. The system of Figure 8 is merely an example and other configurations are possible in accordance with the principles described herein.

Data processing system 800 is configured to receive a stream of frames 801 which in this example comprises a sequence of video frames. At least two consecutive frames of the stream are stored at frame buffer 802. These frames will be referred to as the previous frame 803 and next frame 804 indicating that the frames represent the start and end (respectively) of a current span in respect of which one or more motion vectors are to be determined. Each motion vector is generated in respect of a block of pixels of the previous, next or output frame. Each block represents a region of the previous/next/output frame comprising a group of pixels whose movement between the previous and next frames across the current span is to be identified.

Data processing system 800 comprises a single-ended vector processor 805 and a bidirectional vector processor 808. In the present example, these processors are configured to operate on the pixels of the previous and next frames held at the frame buffer so as to generate single-ended and bidirectional motion vectors, respectively. Since it is trivial to convert between single-ended and double-ended (bidirectional) motion vectors, in other examples the processors 805 and 808 could be configured to generate and operate on any kind of motion vector with a given vector being generated or interpreted as a single or double-ended vector as appropriate to the implementation. Generally, single-ended vector processor 805 may be any kind of vector generator for generating vectors representing pixel mappings between a pair of frames of a sequence, and bidirectional vector processor 808 may be any kind of processor for operating on the vectors generated by the vector generator so as to form complementary vectors in accordance with the principles described herein.

The motion vectors generated by the processors are provided to candidate buffer 812 as candidate motion vectors for the current span between the previous and next frames. The single-ended vector processor 805 first operates on the frames held at the frame buffer 804 so as to generate its candidate motion vectors for the blocks of the previous and next frames. Subsequently, bidirectional vector processor 808 operates on the frames held at the frame buffer 804 so as to generate its candidate motion vectors for the blocks of an interpolated output frame lying within the current span between the previous and next frames. (The interpolated output frame may be hypothetical in the sense that the interpolated frame is not actually generated.) The bidirectional vector processor may use the single-ended vector candidates held at the candidate buffer in the generation of its candidate vectors.

Single-ended vector processor 805 comprises forward vector generator 806 and backward vector generator 807. The forward vector generator 806 is configured to search in the next frame 804 for matches to blocks of pixels defined for the previous frame 803. When a match is found in the next frame for a block of the previous frame, a single-ended vector pointing forwards in time from the previous frame to the next frame is generated to describe the position of the block in the next frame relative to the position of the block in the previous frame: this is a forward single-ended motion vector. The backward vector generator 807 is configured to search in the previous frame 803 for matches to blocks of pixels defined for the next frame 804. When a match is found in the previous frame for a block of the next frame, a single-ended vector pointing backwards in time from the next frame to the previous frame is generated to describe the position of the block in the previous frame relative to the position of the block in the next frame: this is a backward single-ended motion vector.

The forward and backward vector generators may search for similar groups of pixels according to any suitable algorithm. For example, the vector generators may determine the similarity of groups of pixels in the two frames based on a measure of the net similarity of pixels of the two groups - e.g. a sum of the absolute differences (SAD) or mean of squared differences (MSD) in a given pixel value, such as colour or luma. The vector generators may provide one or more single-ended vectors as motion vector candidates to the candidate buffer for each block. For example, up to three single-ended vectors representing the best matches identified for a block may be provided to the candidate buffer.

The pixels searched by the single-ended vector generator in the previous and next frames may be selected according to a predefined pattern or in dependence on additional information. For example, search regions may be selected in dependence on the motion vector(s) (or derivative(s) thereof) established for the block or neighbouring blocks in respect of one or more previous spans, and/or search regions may be selected based on the similarity of colour or luma values of pixel regions.

In practice, it is not usually possible to search every possible mapping of a block of pixels between frames and the object represented by those pixels may change in size or orientation between frames due to its movement in the scene. As a result, it is not always possible to identify the most appropriate motion vector by a pixel-matching search of consecutive frames alone. It can therefore be advantageous to generate additional candidate vectors for assessment. A vector candidate generator 822 may optionally be provided to generate any number of different vector candidates derived by mechanisms other than matching pixels between the previous and next frames. The vector candidate generator may operate at any suitable time with respect to the operation of the single-ended and bidirectional vector processors.

Other vector candidates may be generated by the vector candidate generator for a block in various ways. Motion vectors are known to be highly correlated both spatially and temporally with vectors in adjacent blocks, so the vector candidate generator 822 could introduce neighbouring vectors into the set of vector candidates for a block. This can be especially useful when those neighbouring vectors represent a good match between pixels (e.g. have a low SAD) and the best vector established by the pixel matcher represents a poor match (e.g. has a high SAD). The vector candidate generator 822 may provide one or more candidates based on the output motion vector calculated for the block in respect of previous spans, or based on motion vectors formed in previous spans which end in the block.

The vector candidate generator may alternatively or additionally generate one or more pseudo-random vector candidates so as to allow the system to improve its matches and introduce an adaptive element as the motion in the video changes. Where a block has motion that is not simply predicted by its neighbours, the pseudo-random perturbation of vector candidates can often predict the changes in motion. This method works well for slowly changing vector fields.

As is described in more detail below, the vector candidates 813 held for a block at candidate buffer 812 are assessed in order to determine which of the candidates represents the best estimate for the motion vector of the block. This assessment is performed at candidate assessor 814. The candidate assessor may determine the best vector output in any suitable manner. In the present example, the candidate assessor compares the pixels at each end of the vector in the previous and next frames in order to determine the similarity of those pixels. The candidate assessor is therefore provided with access to appropriate pixel data 823. For example, the candidate assessor could be configured to perform a lookup into frame buffer 802.

Bidirectional vector processor 808 comprises a bidirectional vector generator 811 configured to generate bidirectional vector candidates for the blocks of an interpolated output frame. The bidirectional vector generator may operate in the manner described above with respect to Figure 4 by searching the previous and next frames for areas of image data that are most similar to each other. The search is performed with a view to identifying a double-ended vector for each search block of the interpolated frame which originates at the block and points to similar areas of the previous and next frames. Double ended vectors may be constrained such that the offsets of the areas tested in the previous and next frames are equal in magnitude and opposite in direction with respect to the position of the search block in the interpolated frame. This corresponds to a motion estimation at the temporal mid-point between the previous and next frames. Different constraints may be used for an interpolated frame having a different position within the current span. Bidirectional vector candidates generated by the bidirectional vector generator are provided to candidate buffer 812.

The bidirectional vector processor 808 further comprises checking logic 809 and complementary vector generator 810 which operate so as to generate bidirectional vectors by an alternative mechanism and in doing so reduce the processing burden on the system. The checking logic 809 operates on the single-ended vectors generated by the single-ended vector processor. The checking logic may receive single-ended vectors in any suitable manner, including: directly from the single-ended vector processor 805 as indicated by arrow 824; from the candidate buffer 812; from the candidate assessor 814; or, as is described in the present example and shown in Figure 8, from the vector memory 815. The operation of the checking logic and complementary vector generator 810 will now be described with respect to Figure 6.

Figure 6 shows an interpolated output frame 605 lying in the current span between a pair of input frames: previous frame 803 and next frame 804. Consider a block 601 of the interpolated output frame for which the bidirectional vector processor is to generate a bidirectional vector. In order to check whether it is possible to generate a bidirectional vector for block 601 by the alternative mechanism, checking logic 809 receives: (a) the single-ended forward vector 607 for block 602 of the previous frame which, with respect to the frame bounds, is collocated with search block 601; and (b) the single-ended backwards vector 606 for block 603 of the next frame which is also collocated with search block 601. As shown in Figure 8, in the present example the checking logic 809 receives single-ended vectors 607 and 606 for blocks 602 and 603 from the vector memory 815. This has the advantage that the single-ended vectors 607 and 606 represent the best match vectors for blocks 602 and 603 as determined by the candidate assessor 814.

Blocks of the previous and next frames which overlap the frame coordinates of the centre of the search block may be considered to be collocated with the search block of the interpolated output frame. If more than one block of the previous or next frame overlaps those coordinates, the single-ended vectors of one or more of those blocks may be considered by the checking logic or the closest block to the frame coordinates identifying the centre of the search block may be selected for comparison at the checking logic, to give two examples.

The single ended vectors and double ended vectors may be generated at a different resolutions to one another. For example one motion vector field may use 8x8 pixel blocks and the other may use 16x16 pixel blocks. A block of a lower resolution vector field may be considered collocated with all blocks of a higher resolution vector field which, relative to the bounds of the frames, overlap in some manner with the first vector field. For example, all of the blocks of the higher resolution vector whose centres lie within the bounds of a block of the lower resolution vector may be considered to be collocated with that low resolution block. Various schemes may be used to identify which complementary vector to use for a block of the bidirectional vector field when the resolution of the bidirectional vector field differs from the resolution of the single ended vector field. For example, if the block size of a single ended vector field is greater than the block size of a bidirectional vector field then each single ended block will be collocated with multiple bidirectional blocks; in this case the same complementary vector defined for a single ended block may be assigned to multiple overlapping bidirectional blocks. If the block size of a single ended vector field is smaller than the block size of a bidirectional vector field then each bidirectional block will be collocated with multiple single ended blocks; in this case, for example, an average (e.g. a mean, median or mode) of the complementary vectors defined for the collocated single ended blocks could be used, or one of the complementary vectors defined for the collocated single ended blocks could be used at random.

The checking logic compares the single-ended forward and back vectors of the collocated blocks of the previous and next frames in order to determine whether those vectors are "complementary". The forwards and backwards vectors are complementary if they are the inverse of one another: in other words, the vectors have the substantially the same magnitude but have substantially opposite directions. Forwards and backwards vectors may be considered to have substantially the same magnitude if their magnitudes are within a predefined length or proportion of one another. Forwards and backwards vectors may be considered to have substantially opposite directions if their directions are opposed to one another within a predefined angle or proportion of one another. For example, a maximum difference between the lengths or orientations of a pair of forward and backward vectors beyond which they are no longer considered to be complementary may be expressed as a proportion of the lengths/angles of one or both (e.g. an average) of the vectors or as a proportion of the temporal distance between frames/some reference angle. In other examples, forwards and backwards vectors may be considered to be inverse if they are of the same length and exactly opposed to one another (to within the resolution to which the vectors are defined). The checking logic may identify whether a forward and backward vector pair are inverse in any suitable manner; such identification may or may not include explicit identification of the lengths and directions of the forward and backward vectors.

Appropriate tolerances within which a forwards vector and a backwards vector are considered to be inverse may be determined through trial and error so as to achieve the desired motion estimate characteristics for the intended purpose - for example, a desired level of efficiency and/or quality in an encoded video stream, or a desired image quality in an interpolated frame.

Forwards and backwards vectors may be required to have lengths within, for example, 5%, 3%, 2% or 1% of one another if they are to be inverse to one another. Considering the example of a 1080p video frame, forwards and backwards vectors may be required to have lengths within 8 pixels of one another if they are to be considered inverse to one another. Forwards and backwards vectors may be required to have angles within, for example, 5%, 3%, 2% or 1% of one another if they are to be inverse to one another.

A compound measure of any difference in length and angle between forwards and backwards vectors may be used to determine whether such vectors are inverse to one another. For example, a compound measure of the deviation of a pair of vectors from perfectly inverse may be formed from measures of the differences in length and differences in angle between forwards and backwards vectors:

$$\text{Deviation} = (\text{lengthDeviation} * \text{lengthPenalty}) + (\text{angleDeviation} * \text{anglePenalty})$$

If the deviation measure exceeds some predefined threshold, the forwards and backwards vectors would not be considered inverse; below that threshold the forwards and backwards vectors would be considered inverse. The lengthPenalty and anglePenalty parameters may be determined through trial and error for the units in which the measures of length and angle deviation are expressed. The compound deviation measure may vary linearly with the measures of length and angle deviation; in other examples, the lengthPenalty and anglePenalty parameters may themselves depend on the measures of length and angle deviation such that the compound deviation measure varies non-linearly (e.g. exponentially) with the measures of length and angle deviation.

If the checking logic determines that a pair of forward and backward vectors are complementary, the checking logic causes the complementary vector generator 810 to form a bidirectional vector equivalent to an average of the forward vector plus the inverse of the backwards vector (i.e. the backwards vector with its direction reversed), represented as a double-ended vector. The complementary vector generator 810 may be configured to calculate a complementary vector from a forwards vector and backwards vector in any suitable manner. The vectors generated by complementary vector generator 810 will be referred to as bidirectional complementary vectors. For example, returning to Figure 6, complementary bidirectional vector 608 may be formed by calculating half of the vector sum of the single ended forward vector and the inverse of the backwards vector, the result being expressed as a double-ended vector originating at block 601 of the interpolated output frame rather than single ended vector. This can be expressed mathematically as:

$$\underline{c} = \frac{\underline{a} - \underline{b}}{2}$$

where $\underline{a}$ is the forward vector 607, b is the backwards vector 606 and c is the output complementary bidirectional vector, though this particular calculation need not be explicitly performed by the complementary vector generator. As described below, the checking logic preferably does not pass the search block to the bidirectional vector generator if the checking logic determines that the pair of forward and backward vectors in respect of that block are complementary.

If the forwards and backwards vectors are considered to be complementary then only one of the forwards and backwards vectors need be used to form the output complementary bidirectional vector. In cases where the forwards and backwards vectors need not be exactly the inverse of one another to be considered complementary, forming the output complementary bidirectional vector from both the forwards and backwards vectors can provide a better estimate of the vector field at the search block of the output frame.

In the example shown in Figure 8, a best single-ended vector would typically be available at the vector memory for each block of the previous and next frames. In other implementations, multiple single-ended vector candidates may be available for the collocated blocks of the previous and next frames - e.g. where the checking logic receives single-ended vector candidates directly from the single-ended vector processor of candidate buffer prior to a best vector being determined for each block. In such circumstances, the checking logic may be configured to determine which vectors which exhibit the best match between the pixels at the endpoints of the available vectors and test those vectors (e.g. the checking logic could receive such information from the candidate assessor of vector memory). Alternatively, the checking logic may be configured to test multiple vectors to identify which combinations represent a pair of complementary vectors.

If the checking logic determines that a pair of forward and backward vectors are not complementary, it preferably does not pass the forward and backward vectors to the complementary vector generator in order to generate a complementary bidirectional vector. The checking logic would preferably pass the search block to the bidirectional vector generator for conventional pixel matching to be performed so as to generate one or more bidirectional vector candidates. The checking logic may then proceed to check the next block of the interpolated output frame.

The complementary vector generator 810 may be configured to provide each complementary bidirectional vector it generates to the candidate buffer 812 as a vector candidate. In other examples, the complementary vector generator may provide each complementary bidirectional vector it generates to vector memory 815, optionally replacing any other vectors provided in respect of the same block.

When a complementary bidirectional vector is generated for a block and added to the candidate buffer, it is advantageous to prevent the bidirectional vector generator from also generating vector candidates for that block and/or to prevent the candidate assessor from assessing any vector candidates available for that block. This substantially reduces the processing which is performed at candidate assessor 814 in order to identify the best candidate vector for the block. The candidate assessor may be configured to avoid evaluating the complementary bidirectional vector. For example: the candidate assessor may be configured not to evaluate a vector candidate when there is only one vector candidate; alternatively, complementary bidirectional vectors may be identified to the candidate assessor (e.g. by a flag or other indicator) so as to cause the candidate assessor not to evaluate complementary bidirectional vectors and to output the complementary bidirectional vector as the best vector for the block. Preventing the bidirectional vector generator from generating vector candidates, also substantially reduces the processing required at the bidirectional vector processor. This is especially significant because forming a bidirectional vector is computationally expensive relative to generating single-ended vector. For example, forming each bidirectional vector requires double the number of fetches from pixel memory (e.g. frame buffer 801) in order to compare blocks of the two frames.

For a typical video stream, generating a complementary bidirectional vector at the complementary vector generator and so preventing the bidirectional vector generator from forming vector candidates enables the processing load on the system to be reduced by around a third compared to an equivalent system which does not perform these advantageous methods.

In alternative examples, instead of preventing the bidirectional vector generator from generating vector candidates for the search block, the bidirectional vector processor 808 may delete (or otherwise render unusable, e.g. by means of a suitable flag) any other vector candidates in the candidate buffer for that block. In other examples, the bidirectional vector generator may provide a complementary bidirectional vector for a search block to the candidate buffer for assessment by the candidate assessor along with any other candidates for the block. The complementary bidirectional vector would preferably be assigned a low error score (see below) so as to cause the complementary bidirectional vector to be selected in most (if not all) circumstances.

Complementary bidirectional vectors formed in accordance with the principles described herein often provide a close match to the true bidirectional vector describing the motion of the search block from the interpolated output frame to the two input frames. For example, in the described system, a complementary bidirectional vector will represent the true bidirectional vector more than 50% of the time to within an acceptable level of error. In the exemplary system described herein, the error is typically no more than 1-2 pixels, although this can increase for longer vectors: for example, for single-ended vectors which are 32 pixels in length, the error can be up to around 4 pixels.

As well as substantially reducing the processing load on the system, the use of complementary bidirectional vectors addresses the problems of flicker and associated image artefacts significantly better than do conventional post-processing techniques. This is because the approach makes the assumption that vector fields are spatially consistent within the frame region between the start and end points of the forward and backward single-ended vectors. For example, in Figure 6, by generating complementary bidirectional vector 608, region 609 of the previous frame and region 610 of the next frame are effectively assumed to be regions in which the motion vectors are constant. The use of complementary vectors avoids spurious vectors being generated within such regions and ensures that those regions are homogeneously mapped into the interpolated output frame. This minimises the introduction of flicker by the system through its performance of motion estimation.

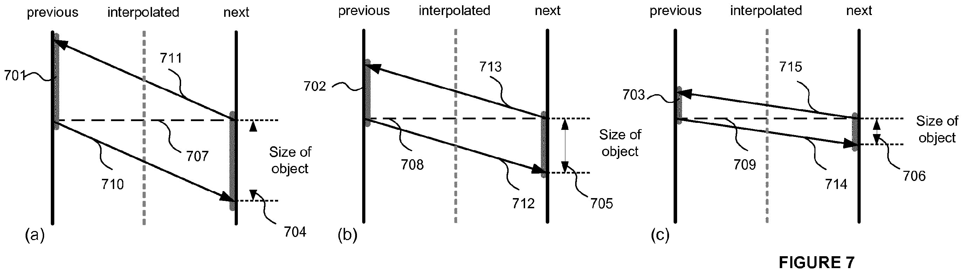

Furthermore, the use of complementary bidirectional vectors tends to give preference to objects moving with a velocity slower than their dimensions. This can be appreciated from Figure 7 which illustrates how a larger object can move faster than a smaller object and still allow complementary bidirectional vectors to be generated for the object. Because the blocks of the previous and next frames at which the single-ended vectors originate must be collocated with the search block of the interpolated frame, there is an upper limit to the speed at which an object of a given size can move through the frames and for which a complementary bidirectional vector can be generated.

Figures 7(a) to 7(c) illustrates the maximum speed at which objects 701-703, respectively, can move through a sequence of frames and still permit a complementary vector to be generated. Each object has a pair of single-ended vectors drawn at the extremities of the object with respect to the spatial dimension shown in Figure 7 (pairs 710 and 711, 712 and 713, and 714 and 715). On the assumption that the object is a solid with homogeneous translational motion (e.g. it does not rotate as it moves), the single-ended vectors will be complementary and the vector field over the object will be uniform. The speed of an object is indicated by the gradient of the single-ended vectors, with a steeper gradient indicating greater movement between frames. From Figures 7(a) to (c) and the respective gradients of the single-ended vectors, it will be observed that the largest object 701 can move with the greatest speed, the smallest object 703 can move with the lowest speed, and the object 702 of intermediate size can move with an intermediate speed.

Since large motions in a video tend to be in the background and foreground detail tends to move more slowly, it will be appreciated that the use of complementary bidirectional vectors both allows large areas of homogeneous background to be mapped into an interpolated output frame and smaller areas of foreground to be mapped without loss of detail, both whilst avoiding the introduction of flicker. In general, because of the constraint that complementary vectors are generated from the vectors of collocated blocks consecutive frames, it can be said that the use of complementary vectors tends to favour small objects which move relatively slowly. Such objects tend to be features in the foreground of a video and systems configured to make use of complementary vectors perform particularly well at reducing flicker in the foreground detail of a video stream.

In the example shown in Figure 8, the vector candidates 813 held for a block at candidate buffer 812 are assessed in order to determine which of the candidates represents the best estimate for the motion vector of the block. This assessment is performed at candidate assessor 814. The candidate assessor may determine the best vector output in any suitable manner. For example, the assessor may compare the groups of pixels of the previous and next frames at each end of the vector in order to determine the similarity of those groups. As noted above, the candidate assessor preferably does not assess complementary bidirectional vectors and such vectors are passed as the best vector output.

For those vector candidates which are to be assessed, an error score is formed representing the degree of similarity of the pairs of pixels groups indicated by each candidate vector so as to allow comparison of the vectors. Such an error score could, for example, be determined based on a measure of the differences between pixels of the two groups - e.g. a sum of the absolute differences (SAD) or a mean of the squared differences (MSD) in a given pixel value, such as colour or luma. The error score may further depend on the similarity of vectors generated for neighbouring blocks such that the error score of a block is a compound measure of the pixel differences between its endpoint blocks and a measure of the similarity of the vectors formed in respect of neighbouring blocks. Various algorithms are known in the art for generating such error scores, including iterative algorithms which form an initial set of vectors which are selected on the basis of pixel similarity alone which are then refined based on the similarity of neighbouring vectors.

For each block, the vector with the lowest error score (or otherwise determined to be the best vector output for the block) is stored at vector memory 815 for use as the vector output for that block.

In the present example, the candidate assessor operates on the values of pixels in the previous and next frames and is therefore provided with access to pixel data 823. This may be limited to the pixel data required by the assessor in order to form a similarity score for each vector candidate, or the pixel values of the previous and next frames may be made available in their entirety to the assessor (e.g. the assessor may be operable to perform a lookup into frame buffer 802).

It may be advantageous to provide the candidate assessor 814 with data generated by the single-ended and bidirectional vector processors. For example, if the vector processors identify vector candidates by matching groups of pixels in the previous and next frames, the vector processors may generate data which the assessor can use in its determination of an error score for the candidates generated by the vector processors. In some implementations, a vector processor could provide the error score itself for the candidates it generates: e.g. in the case that a vector processor calculates a sum of the absolute differences (SAD) for a candidate vector and the candidate assessor uses a sum of the absolute differences as its error score for each vector.

Other approaches for determining the most appropriate vector for a block are known and any such approach may be used in combination with the generation of complementary vectors in accordance with the principles described herein.

The data processing system 800 may be configured to use the vector field generated for the current span and stored at vector memory 815 in a variety of different ways. Two exemplary implementations of the data processing system for motion estimation are described below. It will often be necessary to maintain the vector field generated in respect of a pair of frames for use when processing subsequent frames (e.g. in a video encoder vector fields of a plurality of frame pairs may be used in the encoding of a single frame). The system may be configured to update the vector field maintained at the vector memory 815 for a span to include the complementary bidirectional vectors generated for that span. This allows the complementary bidirectional vectors to be used when processing other parts of the video stream. Alternatively, the system may be configured not to update the vector field for the span to include the complementary bidirectional vectors and to restrict the use of those vectors to the processing of the span for which the complementary bidirectional vectors have been created. The complementary bidirectional vectors may in this case be stored in the vector memory 1212 but suitably tagged to identify them as complementary bidirectional vectors. For example, the complementary bidirectional vectors could be used in a frame rate converter to generate an interpolated frame in the current span but the vector field for that span is not updated to include the complementary bidirectional vectors. Occasionally complementary bidirectional vectors can represent poor pixel mappings and this can avoid such errors propagating over multiple spans between frame pairs.

In a first example, the data processing system is a frame rate converter and includes interpolation logic 816 configured to use the vector field generated for a span between a pair of consecutive frames to generate one or more interpolated frames 820 within that span. For example, interpolation logic 816 may be configured to double the frame rate of a video stream 801 by generating an interpolated frame halfway between every pair of consecutive frames. Figure 6 shows such an interpolated output frame 605 lying at the centre of a current span between previous and next frames. Any suitable interpolation technique may be used which forms new frames from pixel data 818 of the previous and next frames and a vector field (held at vector memory 815) generated for the current span in accordance with the principles described herein. The vector field generated in accordance with the principles described herein may include complementary bidirectional vectors.

Generally speaking, interpolation techniques build up an interpolated frame by identifying the vectors which pass through each block of the interpolated frame (e.g. 601 in Figure 6) and mapping pixels of the previous and/or next frames onto each block in accordance with those vectors which pass through that block. For example, in Figure 6, complementary bidirectional vector 608 may indicate that block 601 of the output frame 605 is to be formed from the pixels of the previous and next frames at the endpoints of the vector. This is because vector 608 represents a linear estimate of the movement of the pixels of the previous and next frames over the current span. Typically algorithms will be employed to blend together overlapping pixels which are mapped into the current frame by the vector field. Many other approaches to interpolation are possible.

In a second example, the data processing system is a video encoder and includes encoding logic 817 configured to use the vector field generated for a span between a pair of consecutive frames to encode the video stream 801 into a compressed form 821. The vector field generated in accordance with the principles described herein may include complementary bidirectional vectors. For example, the encoding logic may periodically replace a sequence of one or more frames of the stream with coded information derived from the vector fields stored at vector memory 815 which describe how the pixels of reference frames immediately preceding and following the sequence of frames move over the period represented by the sequence. When provided with the preceding and following reference frames, the coded information enables the sequence of frames to be largely recreated at a decoder. As is well known in the art, algorithms may be employed to create pixels which cannot be generated from pixels present in the reference frames (e.g. from neighbouring pixels).

Different types of motion estimation can place different requirements on the vectors. In a video encoder application, for example, the requirement is typically to form the most compact representation of a frame, by using motion vectors to reference pixel data from a previous frame from the sequence. These motion vectors generally focus on providing the "closest match" to a block of pixel data (or the lowest residual error), and while the resulting motion vectors are usually representative of the actual motion of objects in the scene, there is no requirement that this is always the case. In other applications, such as de-interlacing or frame rate conversion, where objects in the frame are interpolated at intermediate positions between their locations in the source frames, it is more important that the motion vectors represent the "true motion" of objects in the scene, even if other distortions in the video mean that those vectors do not always give the closest match (or lowest residual error) between blocks of pixel data. By applying appropriate constraints to the candidate motion vectors during motion search, the results can be guided towards "closest match" or "true motion" as necessary.

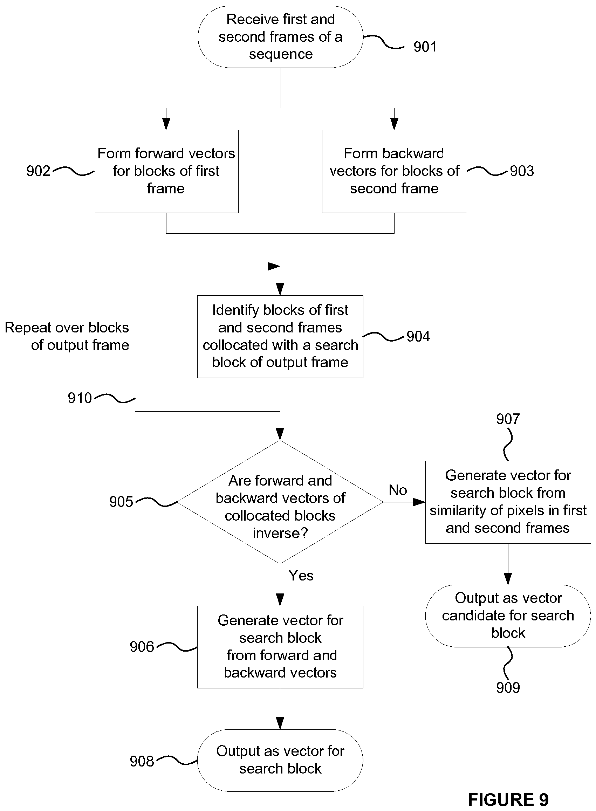

A flowchart illustrating a method for performing motion estimation in a sequence of frames according to the principles described herein is shown in Figure 9. Such a method might be performed by data processing system 800 above. Initially, first and second frames are received 901 which define a current span in respect of which motion estimation is to be performed so as to generate a vector field describing the movement of pixels between the first and second frames. Forward vector candidates 902 and backward vector candidates 903 are formed for the current span according to any suitable technique for identifying pixel mappings between frames. The motion vector candidates may be single-ended or double-ended vectors.

Subsequently or concurrently to the formation of motion vector candidates, blocks of the first and second frames that are collocated with a search block of the output frame lying in the current span between the first and second frames are identified 904. A check is then performed 905 to identify whether the forward and backward vectors of blocks of the first and second frames collocated with the search block are inverse to one another. If the vectors are inverse to one another then a complementary vector is generated 906 for the search block from the forward and backward vectors according to the principles described herein. The complementary vector may be provided as the output vector for the search block 908 so as to avoid the need for other vector candidates to be generated and/or assessed for the search block. If the forwards and backwards vectors are not inverse, a vector is generated 907 for the search block in a conventional manner, e.g. by identifying pixel mappings between the first and second frames based on the similarity of groups of pixels between the frames. Such a vector is may be provided as a motion vector candidate for the search block 909 and subject to assessment along with any other motion vector candidates for that block.

In order to generate complementary vectors wherever possible for the blocks of the output frame, the identification of pairs of collocated blocks and their forward and backward vectors are repeated over the blocks of the output frame 910, with each block taking its turn at being a search block of the output frame.

In the examples described herein, block-based motion estimation is performed. Other forms of motion estimation are possible for which complementary bidirectional vectors may be generated in accordance with the described principles. A block may refer to any contiguous group of one or more pixels, the group of pixels having any shape. As is known in the art, different frames may have different blocks defined for them. Blocks need not be of constant size or shape within a frame or over time between frames; block size and/or shape may be adapted based on the characteristics of the stream of frames.

A frame may be any kind of image information represented or interpreted as a set of pixels. A stream of frames could be a sequence of frames from any source, including: a video; a sequence of still images, such as a sequence of photographs from camera operated in burst mode; a rendered sequence of images or images representing a rendered 3D scene. A sequence of frames may or may not be in temporal order. For example, a sequence of frames may be ordered according to some basis other than time: e.g. a set of frames could be ordered according to a measure of their overall similarity, or a set of images could be ordered according to the position from which each image is captured.

The data processing system of Figure 8 is shown as comprising a number of functional blocks. This is schematic only and is not intended to define a strict division between different logic elements of a data processing system. Each functional block may be provided in any suitable manner.

A data processing system configured in accordance with the principles described herein may be embodied in hardware (e.g. as an integrated circuit with the processing being performed at binary logic) and/or software (e.g. as a set of routines running at a processor such as a graphics processing unit (GPU) or central processing unit (CPU) with access to one or more memories for storing pixel data, motion vector data and other values).

The terms software, program code and computer-readable code encompass executable code for processors (e.g. CPUs and/or GPUs), firmware, bytecode, programming language code such as C or OpenCL, and modules for reconfigurable logic devices such as FPGAs. Computer-readable code further includes code defining representations of integrated circuits at any level, including at register transfer level (RTL), at high-level circuit representations such as Verilog or VHDL, and lower-level representations such as OASIS and GDSII. When executed at a computer system configured for generating a representation of an integrated circuit in hardware, such code defining representations of integrated circuits may cause such a computer system to generate the integrated circuit as defined in the code. The code may include definitions of circuit elements and/or rules for combining circuit elements. Some or all of the rules for combining the defined circuit elements may be provided at the computer system as default rules for generating a representation of an integrated circuit in hardware from such computer-readable code.

The algorithms and methods described herein could be performed by one or more physical processing units executing software that causes the unit(s) to perform the algorithms/methods. The or each physical processing unit could be any suitable processor, such as a CPU or GPU (or a core thereof), or fixed function or programmable hardware. Machine-readable code could be stored in non-transitory form at a machine readable medium such as an integrated circuit memory, or optical or magnetic storage. A machine readable medium might comprise several memories, such as on-chip memories, computer working memories, and non-volatile storage devices.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A data processing system (800) for performing motion estimation in a sequence of frames comprising first and second frames (803, 804) each divided into respective sets of blocks of pixels, the data processing system (800) comprising:

    a candidate assessor (814) for determining an output vector for each block of an output frame (605) interpolated between first and second frames of the sequence;
    a vector generator (806, 807), configured to form a set of forward vectors for the blocks of the first frame and a set of backward vectors for the blocks of the second frame, each forward vector (607) identifying a possible mapping of pixels of respective blocks of the first frame into the second frame, and each backward vector (606) identifying a possible mapping of pixels of respective blocks of the second frame into the first frame; and
    a processor configured to, for a search block (601) of the output frame (605):

identify blocks of the first and second frames that are collocated with the search block;
determine whether a first forward vector from the set of forward vectors formed in respect of one or more collocated blocks of the first frame and a first backward vector from the set of backward vectors formed in respect of one or more collocated blocks of the second frame are inverse to one another by determining if the directions of the first forward and backward vectors are opposed to one another within a predefined angle or proportion of one another and the magnitudes of the first forward and backward vectors are within a predefined length or proportion of one another;

if the first forward and backward vectors are inverse to one another: the processor is configured to calculate a bidirectional output vector (608) for the search block of the output frame from the first forward and backwards vectors; and
the candidate assessor (814) is configured to pass the bidirectional output vector (608) as the output vector for the search block.

2. A data processing system as claimed in claim 1, wherein the processor is configured to generate the bidirectional output vector by forming an average of the first forward and backward vectors.

3. A data processing system as claimed in claim 2, wherein the processor is configured to form the average of the first forward and backward vectors by calculating a vector sum of the first forward vector and the first backward vector inverted.

4. A data processing system as claimed in any preceding claim, wherein the processor is configured to, if the first forward and backward vectors are not inverse to one another, generate a vector candidate for the search block of the output frame by identifying areas of similar pixels in the first and second frames.

5. A data processing system as claimed in any preceding claim, wherein the processor is configured to, if the first forward and backward vectors are inverse to one another, not generate vector candidates for the search block of the output frame by identifying areas of similar pixels in the first and second frames.

6. A data processing system as claimed in any preceding claim, wherein the processor is configured to identify as being collocated with the search block one or more blocks of the first and second frames that are located at a frame position corresponding to the search block in the output frame.

7. A data processing system as claimed in any preceding claim, wherein, on identifying a plurality of blocks of the first/second frame collocated with the search block when the blocks of the first/second frame are at a different resolution to that of the search block, the processor is configured to identify a first forward/backward vector for the plurality of blocks of the first/second frame by:

calculating an average of the forward/backward vectors formed at the vector generator for two or more of the plurality of blocks of the first/second frame; or
selecting at random or according to a predefined scheme one of the forward/backward vectors formed at the vector generator for the plurality of blocks of the first/second frame.

8. A data processing system as claimed in any preceding claim, wherein the vector generator is configured to form a forward vector of the set for a block of the first frame by identifying an area of pixels in the second frame which most closely matches the pixels of the block of the first frame, and to form a backward vector of the set for a block of the second frame by identifying an area of pixels in the first frame which most closely matches the pixels of the block of the second frame.

9. A data processing system as claimed in any preceding claim, wherein the processor is configured to, for the search block if the first forward and backward vectors are inverse to one another:

replace any vector candidates generated for the search block with the bidirectional output vector as the output vector for the search block; or
add the bidirectional output vector to any vector candidates generated for the search block so as to cause the candidate assessor to select the bidirectional output vector as the output vector for the search block.

10. A data processing system as claimed in claim 9, the candidate assessor being operable to calculate a score for each vector candidate of the search block, each score being a measure of the similarity of the pixels in the first and second frames at each end of the respective vector candidate, and the candidate assessor being configured to select the output vector for the search block in dependence on the calculated scores.

11. A data processing system as claimed in claim 10, the candidate assessor being configured not to calculate a score for the bidirectional output vector of the search block and/or any other vector candidates available for the search block.

12. A data processing system as claimed in any preceding claim, wherein the predefined angle is a function of a proportion of the temporal distance between the first and second frames.

13. A data processing system as claimed in any preceding claim, wherein the predefined length is a function of a proportion of the temporal distance between the first and second frames.

14. A method for performing motion estimation in a sequence of frames, the sequence comprising first and second frames each divided into respective sets of blocks of pixels, the method including determining an output vector for each block of an output frame (605) interpolated between first and second frames of the sequence by assessing one or more vector candidates (813) for that block, the method comprising:

forming (902) a set of forward vectors for the blocks of the first frame, each vector identifying a possible mapping of pixels of respective blocks of the first frame into the second frame;
forming (903) a set of backward vectors for the blocks of the second frame, each vector identifying a possible mapping of pixels of respective blocks of the second frame into the first frame;
and, for a search block of the output frame:

identifying (904) blocks of the first and second frames that are collocated with the search block;
determining whether a first forward vector from the set of forward vectors formed in respect of one or more collocated blocks of the first frame and a first backward vector from the set of backward vectors formed in respect of one or more collocated blocks of the second frame are inverse to one another by determining if:

the directions of the first forward and backward vectors are opposed to one another within a predefined angle or proportion of one another; and
the magnitudes of the first forward and backward vectors are within a predefined length or proportion of one another; and

if the first forward and backward vectors are inverse to one another: calculating (906) a bidirectional output vector for the search block of the output frame from the first forward and backward vectors, and passing the bidirectional output vector (608) as the best output vector for the search block.

**Patentansprüche**

1. Datenverarbeitungssystem (800) zum Durchführen einer Bewegungsschätzung in einer Sequenz von Einzelbildern, umfassend erste und zweite Einzelbilder (803, 804), die jeweils in entsprechende Sätze von Pixelblöcken unterteilt sind, das Datenverarbeitungssystem (800) umfassend:

einen Kandidatenbewerter (814) zum Ermitteln eines Ausgabevektors für jeden Block eines Ausgabe-Einzelbildes (605), der zwischen dem ersten und zweiten Frame der Sequenz interpoliert wird;
einen Vektorgenerator (806, 807), der konfiguriert ist, einen Satz von Vorwärtsvektoren für die Blöcke des ersten Einzelbildes und einen Satz von Rückwärtsvektoren für die Blöcke des zweiten Einzelbildes zu bilden, wobei jeder Vorwärtsvektor (607) eine mögliche Abbildung von Pixeln jeweiliger Blöcke des ersten Einzelbildes in das zweite Einzelbild identifiziert und jeder Rückwärtsvektor (606) eine mögliche Abbildung von Pixeln jeweiliger Blöcke des zweiten Einzelbildes in das erste Einzelbild identifiziert; und
einen Prozessor, der konfiguriert ist, für einen Suchblock (601) des Ausgabe-Einzelbildes (605):

Identifizieren von Blöcken des ersten und des zweiten Einzelbildes, die mit dem Suchblock angeordnet sind;
Ermitteln, ob ein erster Vorwärtsvektor aus dem Satz von Vorwärtsvektoren, die in Bezug auf einen oder mehrere kollokierte Blöcke des ersten Einzelbildes gebildet wurden, und ein erster Rückwärtsvektor aus dem Satz von Rückwärtsvektoren, die in Bezug auf einen oder mehrere kollokierte Blöcke des zweiten Einzelbildes gebildet wurden, invers zueinander sind, indem ermittelt wird, ob die Richtungen der ersten Vorwärts- und Rückwärtsvektoren innerhalb eines vordefinierten Winkels oder einer Proportion zueinander entgegengesetzt sind und die Größen der ersten Vorwärts- und Rückwärtsvektoren innerhalb einer vordefinierten Länge oder einer vordefinierten Proportion zueinander liegen;

wenn die ersten Vorwärts- und Rückwärtsvektoren invers zueinander sind:

ist der Prozessor konfiguriert, einen bidirektionalen Ausgabevektor (608) für den Suchblock des Ausgabe-Einzelbildes aus den ersten Vorwärts- und Rückwärtsvektoren zu berechnen; und
ist der Kandidatenbewerter (814) konfiguriert, den bidirektionalen Ausgabevektor (608) als Ausgabevektor für den Suchblock weiterzugeben.

2. Datenverarbeitungssystem nach Anspruch 1, wobei der Prozessor konfiguriert ist, den bidirektionalen Ausgabevektor durch Bilden eines Mittelwertes der ersten Vorwärts- und Rückwärtsvektoren zu erzeugen.

3. Datenverarbeitungssystem nach Anspruch 2, wobei der Prozessor konfiguriert ist, den Mittelwert der ersten Vorwärts- und Rückwärtsvektoren durch Berechnen einer Vektorsumme aus dem ersten Vorwärtsvektor und dem ersten invertierten Rückwärtsvektor zu bilden.

4. Datenverarbeitungssystem nach einem der vorhergehenden Ansprüche, wobei der Prozessor konfiguriert ist, um, wenn die ersten Vorwärts- und Rückwärtsvektoren nicht invers zueinander sind, einen Vektorkandidaten für den Suchblock des Ausgabe-Einzelbildes durch Identifizieren von Bereichen mit ähnlichen Pixeln in den ersten und zweiten Einzelbildern zu erzeugen.

5. Datenverarbeitungssystem nach einem der vorhergehenden Ansprüche, wobei der Prozessor konfiguriert ist, um, wenn die ersten Vorwärts- und Rückwärtsvektoren invers zueinander sind, keine Vektorkandidaten für den Suchblock des Ausgabe-Einzelbildes durch Identifizieren von Bereichen mit ähnlichen Pixeln in den ersten und zweiten Einzelbildern zu erzeugen.

6. Datenverarbeitungssystem nach einem der vorhergehenden Ansprüche, wobei der Prozessor konfiguriert ist, einen oder mehrere Blöcke des ersten und des zweiten Einzelbildes, die sich an einer dem Suchblock im Ausgabe-Einzelbild entsprechenden Einzelbildposition befinden, als mit dem Suchblock kollokiert zu identifizieren.

7. Datenverarbeitungssystem nach einem der vorhergehenden Ansprüche, wobei beim Identifizieren einer Vielzahl von Blöcken des ersten/zweiten Einzelbildes, die mit dem Suchblock kollokiert sind, wenn die Blöcke des ersten/zweiten Einzelbildes eine andere Auflösung als die des Suchblocks aufweisen, der Prozessor konfiguriert ist, um einen ersten Vorwärts-/Rückwärtsvektor für die Vielzahl von Blöcken des ersten/zweiten Einzelbildes zu identifizieren durch:

Berechnen eines Mittelwerts der am Vektorgenerator gebildeten Vorwärts-/Rückwärtsvektoren für zwei oder mehrere der Vielzahl von Blöcken des ersten/zweiten Einzelbildes; oder
Auswählen eines der Vorwärts-/Rückwärtsvektoren, die am Vektorgenerator für die Vielzahl von Blöcken des ersten/zweiten Einzelbildes gebildet werden, nach dem Zufallsprinzip oder nach einem vordefinierten Schema.

8. Datenverarbeitungssystem nach einem der vorhergehenden Ansprüche, wobei der Vektorgenerator konfiguriert ist, einen Vorwärtsvektor des Satzes für einen Block des ersten Einzelbildes durch Identifizieren eines Pixelbereichs in dem zweiten Einzelbild zu bilden, der den Pixeln des Blocks des ersten Einzelbildes am nächsten kommt, und einen Rückwärtsvektor des Satzes für einen Block des zweiten Einzelbildes durch Identifizieren eines Pixelbereichs in dem ersten Einzelbild zu bilden, der den Pixeln des Blocks des zweiten Einzelbildes am nächsten kommt.

9. Datenverarbeitungssystem nach einem der vorhergehenden Ansprüche, wobei der Prozessor konfiguriert ist, konfiguriert ist, um, für den Suchblock, wenn die ersten Vorwärts- und Rückwärtsvektoren invers zueinander sind:

Ersetzen aller für den Suchblock erzeugten Vektorkandidaten durch den bidirektionalen Ausgabevektor als Ausgabevektor für den Suchblock; oder
Hinzufügen des bidirektionalen Ausgabevektors zu jedem Vektorkandidaten, der für den Suchblock erzeugt wurde, um den Kandidatenbewerter zu veranlassen, den bidirektionalen Ausgabevektor als den Ausgabevektor für den Suchblock auszuwählen.

**10.** Datenverarbeitungssystem nach Anspruch 9, wobei der Kandidatenbewerter betriebsfähig ist, eine Punktzahl für jeden Vektorkandidaten des Suchblocks zu berechnen, wobei jede Punktzahl ein Maß für die Ähnlichkeit der Pixel in den ersten und dem zweiten Einzelbild an jedem Ende des jeweiligen Vektorkandidaten ist, und der Kandidatenbewerter konfiguriert ist, das Ausgabe-Einzelbild für den Suchblock in Abhängigkeit von den berechneten Punktzahlen auszuwählen.

**11.** Datenverarbeitungssystem nach Anspruch 10, wobei der Kandidatenbewerter konfiguriert ist, keine Punktzahl für den bidirektionalen Ausgabevektor des Suchblocks und/oder jeden anderen für den Suchblock verfügbaren Vektorkandidaten zu berechnen.

**12.** Datenverarbeitungssystem nach einem der vorhergehenden Ansprüche, wobei der vordefinierte Winkel eine Funktion einer Proportion der zeitlichen Distanz zwischen dem ersten und zweiten Einzelbild ist.

**13.** Datenverarbeitungssystem nach einem der vorhergehenden Ansprüche, wobei die vordefinierte Länge eine Funktion einer Proportion der zeitlichen Distanz zwischen dem ersten und zweiten Einzelbild ist.

**14.** Verfahren zum Durchführen einer Bewegungsschätzung in einer Sequenz von Einzelbildern, wobei die Sequenz erste und zweite Einzelbilder umfasst, die jeweils in entsprechende Sätze von Pixelblöcken unterteilt sind, wobei das Verfahren das Ermitteln eines Ausgabevektors für jeden Block eines Ausgabe-Einzelbildes (605) beinhaltet, das zwischen ersten und zweiten Einzelbildern der Sequenz interpoliert wird, indem ein oder mehrere Vektorkandidaten (813) für diesen Block bewertet werden, das Verfahren umfassend:

Bilden (902) eines Satzes von Vorwärtsvektoren für die Blöcke des ersten Einzelbildes, wobei jeder Vektor eine mögliche Abbildung von Pixeln der jeweiligen Blöcke des ersten Einzelbildes in das zweite Einzelbild identifiziert;
Bilden (903) eines Satzes von Rückwärtsvektoren für die Blöcke des zweiten Einzelbildes, wobei jeder Vektor eine mögliche Abbildung von Pixeln der jeweiligen Blöcke des zweiten Einzelbildes in das erste Einzelbild identifiziert;
und, für einen Suchblock des Ausgabe-Einzelbildes:

Identifizieren (904) von Blöcken des ersten und des zweiten Einzelbildes, die mit dem Suchblock angeordnet sind;
Ermitteln, ob ein erster Vorwärtsvektor aus dem Satz von Vorwärtsvektoren, die in Bezug auf einen oder mehrere kollokierte Blöcke des ersten Einzelbildes gebildet wurden, und ein erster Rückwärtsvektor aus dem Satz von Rückwärtsvektoren, die in Bezug auf einen oder mehrere kollokierte Blöcke des zweiten Einzelbildes gebildet wurden, invers zueinander sind, durch Ermitteln, ob:

die Richtungen der ersten Vorwärts- und Rückwärtsvektoren innerhalb eines vordefinierten Winkels oder einer Proportion zueinander entgegengesetzt sind; und
die Größen des ersten Vor- und Rückwärtsvektors innerhalb einer vordefinierten Länge oder Proportion zueinander liegen; und

wenn die ersten Vorwärts- und Rückwärtsvektoren invers zueinander sind:
Berechnen (906) eines bidirektionalen Ausgabevektors für den Suchblock des Ausgabe-Einzelbildes aus den ersten Vorwärts- und Rückwärtsvektoren und Weitergeben des bidirektionalen Ausgabevektors (608) als den besten Ausgabevektor für den Suchblock.

**Revendications**

**1.** Système de traitement de données (800) pour la réalisation d'une estimation de mouvement dans une séquence de trames comprenant des première et deuxième trames (803, 804) chacune divisée en ensembles respectifs de blocs de pixels, le système de traitement de données (800) comprenant :

un évaluateur de candidat (814) pour la détermination d'un vecteur de sortie pour chaque bloc d'une trame de sortie (605) interpolé entre des première et deuxième trames de la séquence ;
un générateur de vecteurs (806, 807), configuré pour former un ensemble de vecteurs avant pour les blocs de la première trame et un ensemble de vecteurs arrière pour les blocs de la deuxième trame, chaque vecteur avant (607) identifiant un mappage possible de pixels des blocs respectifs de la première trame dans la deuxième trame, et chaque vecteur arrière (606) identifiant un mappage possible de pixels des blocs respectifs de la deuxième trame dans la première trame ; et

un processeur configuré pour, pour un bloc de recherche (601) de la trame de sortie (605) :

identifier des blocs des première et deuxième trames qui sont colocalisés avec le bloc de recherche ;
déterminer si un premier vecteur avant parmi l'ensemble de vecteurs avant formés par rapport à un ou plusieurs blocs colocalisés de la première trame et un premier vecteur arrière parmi l'ensemble de vecteurs arrière formés par rapport à un ou plusieurs blocs colocalisés de la deuxième trame sont inverses les uns par rapport aux autres en déterminant si les directions des premiers vecteurs avant et arrière sont opposées l'une à l'autre dans un angle ou une proportion prédéfinis l'un par rapport à l'autre et les magnitudes des premiers vecteurs avant et arrière sont dans une longueur ou une proportion prédéfinie l'un par rapport à l'autre ;

si les premiers vecteurs avant et arrière sont inverses l'un par rapport l'autre :

le processeur est configuré pour calculer un vecteur de sortie bidirectionnel (608) pour le bloc de recherche de la trame de sortie à partir des premiers vecteurs avant et arrière ; et
l'évaluateur de candidat (814) est configuré pour transmettre le vecteur de sortie bidirectionnel (608) en tant que vecteur de sortie pour le bloc de recherche.

2. Système de traitement de données selon la revendication 1, dans lequel le processeur est configuré pour générer le vecteur de sortie bidirectionnel en formant une moyenne des premiers vecteurs avant et arrière.

3. Système de traitement de données selon la revendication 2, dans lequel le processeur est configuré pour former la moyenne des premiers vecteurs avant et arrière en calculant une somme de vecteurs du premier vecteur avant et du premier vecteur arrière inversé.

4. Système de traitement de données selon l'une quelconque des revendications précédentes, dans lequel le processeur est configuré pour, si les premiers vecteurs avant et arrière ne sont pas inverses l'un par rapport à l'autre, générer un candidat vecteur pour le bloc de recherche de la trame de sortie en identifiant des zones de pixels similaires dans les première et deuxième trames.

5. Système de traitement de données selon l'une quelconque des revendications précédentes, dans lequel le processeur est configuré pour, si les premiers vecteurs avant et arrière sont inverses l'un par rapport à l'autre, ne pas générer des candidats vecteurs pour le bloc de recherche de la trame de sortie en identifiant des zones de pixels similaires dans les première et deuxième trames.

6. Système de traitement de données selon l'une quelconque des revendications précédentes, dans lequel le processeur est configuré pour identifier comme étant colocalisé avec le bloc de recherche un ou plusieurs blocs des première et deuxième trames qui sont situés au niveau d'une position de trame correspondant au bloc de recherche dans la trame de sortie.

7. Système de traitement de données selon l'une quelconque des revendications précédentes, dans lequel, lors de l'identification d'une pluralité de blocs de la première/deuxième trame colocalisés avec le bloc de recherche lorsque les blocs de la première/deuxième trame sont à une résolution différente de celle du bloc de recherche, le processeur est configuré pour identifier un premier vecteur avant/arrière pour la pluralité de blocs de la première/deuxième trame par :

le calcul d'une moyenne des vecteurs avant/arrière formés au niveau du générateur de vecteurs pour deux ou plus de la pluralité de blocs de la première/deuxième trame ; ou
la sélection au hasard ou selon un schéma prédéfini d'un des vecteurs avant/arrière formés au niveau du générateur de vecteurs pour la pluralité de blocs de la première/deuxième trame.

8. Système de traitement de données selon l'une quelconque des revendications précédentes, dans lequel le générateur de vecteur est configuré pour former un vecteur avant de l'ensemble pour un bloc de la première trame en identifiant une zone de pixels dans la deuxième trame qui correspond le plus étroitement aux pixels du bloc de la première trame, et pour former un vecteur arrière de l'ensemble pour un bloc de la deuxième trame en identifiant une zone de pixels dans la première trame qui correspond le plus étroitement aux pixels du bloc de la deuxième trame.

**9.** Système de traitement de données selon l'une quelconque des revendications précédentes, dans lequel le processeur est configuré pour, pour le bloc de recherche si les premiers vecteurs avant et arrière sont inverses l'un par rapport à l'autre :

remplacer tout vecteur candidat généré pour le bloc de recherche par le vecteur de sortie bidirectionnel en tant que vecteur de sortie pour le bloc de recherche ; ou
ajouter le vecteur de sortie bidirectionnel à tous candidats de vecteur générés pour le bloc de recherche afin d'amener l'évaluateur de candidats à sélectionner le vecteur de sortie bidirectionnel en tant que vecteur de sortie pour le bloc de recherche.

**10.** Système de traitement de données selon la revendication 9, l'évaluateur de candidats pouvant être utilisé pour calculer un score pour chaque candidat vecteur du bloc de recherche, chaque score étant une mesure de la similarité des pixels dans les première et deuxième trames au niveau de chaque extrémité du candidat vecteur respectif, et l'évaluateur de candidats étant configuré pour sélectionner le vecteur de sortie pour le bloc de recherche en fonction des scores calculés.

**11.** Système de traitement de données selon la revendication 10, l'évaluateur de candidats étant configuré pour ne pas calculer un score pour le vecteur de sortie bidirectionnel du bloc de recherche et/ou tout autre candidat vecteur disponible pour le bloc de recherche.

**12.** Système de traitement de données selon l'une quelconque des revendications précédentes, dans lequel l'angle prédéfini est une fonction d'une proportion de la distance temporelle entre les première et deuxième trames.

**13.** Système de traitement de données selon l'une quelconque des revendications précédentes, dans lequel la longueur prédéfinie est une fonction d'une proportion de la distance temporelle entre la première et la deuxième trame.

**14.** Procédé pour la réalisation d'une estimation de mouvement dans une séquence de trames, la séquence comprenant les première et deuxième trames chacune divisée en ensembles respectifs de blocs de pixels, le procédé incluant la détermination d'un vecteur de sortie pour chaque bloc d'une trame de sortie (605) interpolé entre des première et deuxième trames de la séquence par l'évaluation d'un ou plusieurs candidats de vecteurs (813) pour ce bloc, le procédé comprenant :

la formation (902) d'un ensemble de vecteurs avant pour les blocs de la première trame, chaque vecteur identifiant une cartographie possible de pixels des blocs respectifs de la première trame dans la deuxième trame ;
la formation (903) d'un ensemble de vecteurs arrière pour les blocs de la deuxième trame, chaque vecteur identifiant un mappage possible de pixels de blocs respectifs de la deuxième trame dans la première trame ;
et, pour un bloc de recherche de la trame de sortie :

l'identification (904) des blocs des première et deuxième trames qui sont colocalisés avec le bloc de recherche ;
le fait de déterminer si un premier vecteur avant parmi l'ensemble de vecteurs avant formés par rapport à un ou plusieurs blocs colocalisés de la première trame et un premier vecteur arrière parmi l'ensemble de vecteurs arrière formés par rapport à un ou plusieurs blocs colocalisés de la deuxième trame sont inverses l'un par rapport à l'autre en déterminant si :

les directions des premiers vecteurs avant et arrière sont opposées l'une par rapport à l'autre dans un angle ou une proportion prédéfinis l'un par rapport à l'autre ; et
les magnitudes des premiers vecteurs avant et arrière sont dans une longueur ou une proportion prédéfinie l'un par rapport à l'autre ; et

si les premiers vecteurs avant et arrière sont inverses l'un par rapport l'autre :
le calcul (906) d'un vecteur de sortie bidirectionnel pour le bloc de recherche de la trame de sortie à partir des premiers vecteurs avant et arrière, et la transmission du vecteur de sortie bidirectionnel (608) en tant que meilleur vecteur de sortie pour le bloc de recherche.

FIGURE 1

FIGURE 2

FIGURE 3

FIGURE 4

**FIGURE 5**

**FIGURE 6**

FIGURE 8

FIGURE 7

**FIGURE 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010053451 A1

- US 2010053451 A

**Non-patent literature cited in the description**

- **Y. KUSZPET et al.** Post-Processing for Flicker Reduction in H.264/AVC. *Proc. Picture Coding Symposium, Lisbon, Portugal,* November 2007
- **H. ABBAS ; L. J. KARAM.** Suppression of Mosquito Noise by recursive Epsilon-filters. *Proc. IEEE ICASSP, Honolulu, Hawaii,* April 2007

- **AND V. NARANJO ; A. ALBIOL.** Flicker reduction in old films. *Proc. IEEE ICIP, Vancouver, Canada,* September 2000